# EUROPÄISCHE PATENTSCHRIFT

(11) **EP 2 775 173 B1**
(45) Veröffentlichungstag und Bekanntmachung des Hinweises auf die Patenterteilung: **28.09.2016**
(21) Anmeldenummer: 14155499.8
(22) Anmeldetag: 18.02.2014
(51) Int. Cl.: F16H 57/027, F16H 57/04

(54) **Einrichtung zur Entlüftung von Getrieben**
Device for venting gear units
Dispositif de purge d'air d'engrenages

(30) Priorität: 04.03.2013 DE 102013203612
(43) Veröffentlichungstag der Anmeldung: 10.09.2014
(73) Patentinhaber: Siemens Aktiengesellschaft, 80333 München (DE)
(72) Erfinder: Heyne, Stefan, 04654 Frohburg (DE); Krämer, Uwe, 09322 Penig (DE); Steubler, Thomas, 09385 Lugau /Erzgeb. (DE)

(56) Entgegenhaltungen:
- DE-A1- 4 136 392
- DE-B3-102011 085 377
- JP-A- 2009 293 749

## Beschreibung

Die vorliegende Erfindung betrifft ein Getriebe mit einer Einrichtung zur Entlüftung von Getrieben.

Die Verlustwärme eines Getriebes führt zu Temperaturschwankungen im Getriebegehäuse. Bedingt durch die Temperaturschwankungen ändert sich der Innendruck im Getriebegehäuse. Diese Druckunterschiede zwischen dem Gehäuseinnenraum und der Umgebung des Gehäuses sind auszugleichen.

Bei Getrieben, bei denen die Orientierung des Schmierstoffpegels relativ zu den Getriebeachsen während des Betriebs des Getriebes unverändert bleibt, kann die Entlüftung auf einfache Art und Weise durch ein Entlüftungsventil erzielt werden, das an einer oberhalb des Schmierstoffpegels liegenden Stelle am Getriebegehäuse angeordnet ist. Bei schwenkenden oder sogar um 360 Grad rotierenden Getrieben dagegen ist ein solches Ventil nicht einsetzbar, da aufgrund der Lageänderung des Getriebes das Ventil unter den Schmierstoffpegel gelangen und somit Schmierstoff aus dem Getriebegehäuse entweichen würde.

In der Patentschrift DD 254 235 A1 wird eine Einrichtung zur Ent- und Belüftung von Getrieben beschrieben, die einer großen drehenden oder schwenkenden Lageänderung unterliegen, wie sie beispielsweise bei Gelenkantrieben von Industrierobotern oder bei geländegängigen Fahrzeugen auftritt. Die beschriebene Einrichtung zeichnet sich dadurch aus, dass in einer Getriebewelle eine enge, axiale Entlüftungsöffnung vorgesehen ist, deren im Getriebezentrum liegender Ausgang mit einem an sich bekannten, Spritzöl- und Ölnebel abweisenden Entlüfter ausgestattet ist. Nachteilig an dieser Entlüftungslösung ist, dass sie eine mechanische Bearbeitung einer Getriebewelle erfordert. Dies ist aufwändig und kann die zulässige Drehmomentbelastung der Welle begrenzen.

JP 2009 293749 A (Aichi Machine Ind) 17. Dezember 2009, welches als nächstliegender Stand der Technik betrachtet wird, beschreibt ein einen Entlüfter umfassendes Automobilgetriebe gemäß dem Oberbegriff von Anspruch 1.

Aufgabe der vorliegenden Erfindung ist es, eine verbesserte Entlüftungslösung für rotierende Getriebe bereitzustellen.

Diese Aufgabe wird erfindungsgemäß durch ein Getriebe mit den in Anspruch 1 angegebenen Merkmalen gelöst.

Die Einrichtung dient der Entlüftung von Getrieben. Die Einrichtung umfasst ein erstes und ein zweites Bauteil. Beide Bauteile sind mittels eines Gelenks miteinander verbunden und zueinander beweglich. Das erste Bauteil ist zur festen Anordnung an dem Getriebe vorgesehen. Das zweite Bauteil ist zur beweglichen Anordnung an einer Außenseite eines Getriebegehäuses des Getriebes vorgesehen. Die Einrichtung umfasst außerdem eine sich entlang der beiden Bauteile erstreckende Rohrleitung. Ein Luftaustausch zwischen einem am ersten Bauteil angeordneten ersten Ende der Rohrleitung und einem am zweiten Entlüfterbauteil angeordneten zweiten Ende der Rohrleitung durch die Rohrleitung hindurch ist möglich. Der Schwerpunkt des zweiten Bauteils liegt in Bezug auf eine Verbindungsstelle des Gelenks und des zweiten Bauteils dem zweiten Ende der Rohrleitung gegenüber.

Der Begriff "Rohrleitung" umfasst sowohl eine flexible Schlauchleitung, z.B. einen Kunststoff- oder Gummischlauch, als auch ein starres Rohr, z.B. ein Metall- oder Kunststoffrohr.

Der Erfindung liegt die Erkenntnis zugrunde, dass die Schwerkraft dazu genutzt werden kann, ein Ende einer Rohrleitung zur Entlüftung stets vertikal oberhalb eines Schmierstoffpegels zu positionieren. Dazu ist es erforderlich, dass ein Bauteil der Einrichtung, in dem das eine Entlüftungsöffnung aufweisende Ende der Rohrleitung angeordnet ist, unabhängig von dem Getriebe beweglich ist und dass der Schwerpunkt die ses Bauteils in Bezug auf den Dreh- bzw. Rotationspunkt des Bauteils gegenüber dem die Entlüftungsöffnung aufweisenden Ende der Rohrleitung liegt. Das sich dadurch einstellende selbständige Aufrichten des Bauteils der Entlüftungseinrichtung an der Außenseite des Getriebegehäuses bewirkt, dass das die Entlüftungsöffnung aufweisende Ende des Bauteils immer oberhalb des momentanen Ölstandes positioniert ist, kein Öl aus dem Getriebe austritt und sich im Getriebeinneren kein Überdruck aufbauen kann.

Die Erfindung dient einer sicheren und einfach auszuführenden Entlüftung von Getrieben mit sehr hohem Schwenkbereich bzw. von sich mitdrehenden Getrieben, wie sie z.B. in Verseilmaschinen Anwendung finden, auf Basis einer kostengünstigen mechanischen Lösung. Die Erfindung erweitert den Anwendungsbereich von Getriebemotoren, z.B. im Handlingsbereich, im Vorrichtungsbau, bei Fahrgeschäften, usw.

Die Anordnung des relativ zum Getriebe beweglichen, insbesondere rotierbaren, zweiten Bauteils an der Außenseite des Getriebegehäuses gewährleistet eine große Bewegungsfreiheit des zweiten Bauteils. Dank der Anordnung des zweiten Bauteils außerhalb des Getriebes muss im Inneren des Getriebes kein Raum für die Bewegung des zweiten Bauteils vorgesehen werden; das Getriebe kann also kompakt konstruiert werden. Da das zweite Bauteil und das Gelenk, welches das erste und das zweite Bauteil miteinander verbindet, außerhalb des Getriebes angeordnet sind, ist eine unerwünschte Beeinflussung durch Schmiermittel, z.B. ein unerwünschtes Anlegen von Schmiermittel an der Außenseite des zweiten Bauteils bzw. Gelenks, ausgeschlossen.

Der bewegliche Abschnitt der Entlüftereinrichtung ist also außerhalb des Getriebegehäuses angeordnet; der Vorteil ist, dass eine Drehung des beweglichen Abschnitts der Entlüftereinrichtung nicht durch Öl behindert werden kann.

Vorteilhafte Ausgestaltungen und Weiterbildungen der Erfindung sind in den abhängigen Ansprüchen angegeben.

Gemäß einer bevorzugten Ausgestaltung der Erfindung erstreckt sich die Rohrleitung durch die beiden Bauteile der Einrichtung und/oder das Gelenk. Von Vorteil ist dabei, dass die Rohrleitung im Inneren der Einrichtung geschützt verläuft.

Gemäß einer bevorzugten Ausgestaltung der Erfindung umfasst die Einrichtung einen Ausgleichsbehälter, insbesondere einen Druckausgleichsbehälter, in den im Falle eines Überdrucks im Getriebeinneren Öl aus dem Getriebeinneren eintreten kann. Auf diese Weise kann der Druck im Inneren des Getriebes gegenüber dem Umgebungsdruck ausgeglichen werden. Besonders bevorzugt ist es, wenn das zweite Bauteil diesen Ausgleichsbehälter umfasst, z.B. der Ausgleichsbehälter in das zweite Bauteil integriert ist. Von Vorteil ist dabei, dass das Öl zunächst aus dem Getriebeinneren entweichen kann, ohne sofort in die Umgebung des Getriebes verloren zu gehen.

Gemäß einer bevorzugten Ausgestaltung der Erfindung umfasst das zweite Entlüfterbauteil zur Festlegung des Schwerpunkts eine Aufnahmevorrichtung für ein Gewichtselement. Die Aufnahmevorrichtung kann ein Bolzen sein, auf welchen ein Gewichtselement aufgeschraubt wird. Von Vorteil ist dabei, dass je nach Schwenkbereich und -frequenz des Getriebes durch geeignete Wahl des Gewichtselements die Lage des Schwerpunkts und die Gewichtskraft optimiert eingestellt werden kann.

Gemäß einer bevorzugten Ausgestaltung der Erfindung ist die axiale Länge des zweiten Bauteils so groß gewählt, dass die getriebeabgewandte Mündung der Rohrleitung in jeder möglichen Position des Getriebes einen Ölpegel im Getriebe überragt. Der drehbare Abschnitt der Entlüftereinrichtung ist also vorteilhaft so lang, dass das Ende der Rohrleitung zur Entlüftung stets vertikal oberhalb des Ölpegels positioniert ist. Außerhalb des Getriebegehäuses ist mehr Raum als im Getriebeinnern; durch die Anordnung des zweiten Bauteils außerhalb des Getriebes kann daher der bewegliche Teil des Entlüfters so lang gewählt werden dass auch bei komplizierten Drehungen des Getriebes die obere Entlüftungsöffnung immer oberhalb des Ölniveaus ist.

Gemäß einer bevorzugten Ausgestaltung der Erfindung umfasst die Einrichtung eine Befestigungsvorrichtung zur Montage des ersten Bauteils an einer Außenseite eines Getriebegehäuses umfasst. Beispielsweise kann das erste Bauteil an einen Flansch des Getriebegehäuses anschraubbar sein.

Gemäß einer bevorzugten Ausgestaltung der Erfindung ist das Gelenk als ein Kugel- oder Drehgelenk, insbesondere als eine Axial-Drehdurchführung, ausgebildet.

Gemäß einer bevorzugten Ausgestaltung der Erfindung ist am zweiten Ende der Rohrleitung ein herkömmlicher Entlüfter, z.B. mit einer Abdeckkappe, angeordnet. Der Entlüfter besitzt eine Entlüftungsöffnung zum Hindurchströmen von Luft in beiden Richtungen, so dass Luft aus dem Getriebeinnenraum ausströmen und in den Getriebeinnenraum einströmen kann. Durch eine Abdeckkappe oder eine nicht-vertikale Ausrichtung der Öffnung kann ein Zutritt von unerwünschten Stoffen, die das Innere des Getriebes verunreinigen würden, z.B. Staub oder Regenwasser, in die Rohrleitung weitgehend verhindert werden.

Gemäß einer bevorzugten Ausgestaltung der Erfindung ist in die Rohrleitung eine Rückschlagarmatur eingesetzt. Die Rückschlagarmatur ist dabei geeignet, die Rohrleitung gegen einen Durchtritt eines Schmiermittels, z.B. eines Getriebeöls, in Richtung zu dem zweiten Ende der Rohrleitung abzudichten. Dazu kann die Rückschlagarmatur als eine Rückschlagklappe oder ein Kugelventil ausgebildet sein, welche aufgrund der Strömung des Schmiermittels, das aus dem Getriebeinneren in Richtung zu dem zweiten Ende der Rohrleitung strömt, die Rohrleitung verschließen. Somit wird ein Durchtritt des Schmiermittels bis zu dem zweiten Ende der Rohrleitung und zu der Entlüftungsöffnung verhindert. Die Rückschlagarmatur dient somit als ein Sicherheitsventil, welches zwar einen Druckausgleich zwischen dem Getriebeinneren und der Umgebung über die Rohrleitung ermöglicht, aber einen Austritt eines Schmierstoffs aus dem Getriebe in die Umgebung verhindert.

Mithilfe der Rückschlagarmatur kann ein unerwünschtes Ansteigen des Schmierstoffpegels in der Rohrleitung bis zu der Entlüftungsöffnung, wie es bei einem ungünstigen Drehverhalten des Getriebes auftreten kann, bei dem die durch die Schwerkraft hervorgerufene vertikale Ausrichtung des zweiten Bauteils nur verzögert erfolgt, verhindert werden, zumindest so lange, bis sich das zweite Bauteil wieder in eine vertikale Ausrichtung eingependelt hat. Auch bei einer unerwartet hohen Drehgeschwindigkeit eines Getriebes, bei der die Zentrifugalkraft auf den Schwerpunkt größer als die Schwerkraft ist und somit keine vertikale Ausrichtung des zweiten Bauteils eintritt, kann mittels der Rückschlagarmatur ein unerwünschtes Ansteigen des Schmierstoffpegels in der Rohrleitung bis zu der Entlüftungsöffnung verhindert werden.

Mithilfe der Rückschlagarmatur ist es auch möglich, das zweite Bauteil der Einrichtung kürzer auszubilden, als es eigentlich erforderlich wäre, wenn man in jeder Lage des Getriebes eine Position der am zweiten Ende der Rohrleitung angeordneten Entlüftungsöffnung vertikal oberhalb des Schmierstoffpegels sicherstellen möchte. Die Rückschlagarmatur stellt auch bei einem verkürzten zweiten Bauteil sicher, dass eine Position der am zweiten Ende der Rohrleitung angeordneten Entlüftungsöffnung vertikal unterhalb des Schmierstoffpegels nicht zwangsläufig zu einem Austritt von Schmierstoff aus der Entlüftungsöffnung führt, weil eben die Rohrleitung gegen einen Durchtritt des Schmiermittels durch die Rückschlagarmatur abgedichtet wird. Wird die Entlüftungseinrichtung so ausgebildet, dass eine derartige "kritische" Position der am zweiten Ende der Rohrleitung angeordneten Entlüftungsöffnung vertikal unterhalb des Schmierstoffpegels nur vorübergehend und kurzzeitig (z.B. im Bereich von 1 s) auftritt, kann dies eine akzeptable und ausreichend sichere Lösung darstellen. Dies kann z.B. bei einem um 360 Grad drehenden Getriebe eine deutliche Verkürzung des zweiten Bauteils der Einrichtung erlauben.

Das erfindungsgemäße Getriebe kann ein Industriegetriebe oder Applikationsgetriebe beliebiger Art, z.B. Planeten-, Stirnrad- oder Schneckengetriebe sein.

Gemäß einer bevorzugten Ausgestaltung der Erfindung liegt das zweite Ende der Rohrleitung unabhängig von der Lage des Getriebes vertikal über einem Schmierstoffniveau im Innenraum des Getriebes.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Halbschnitt eines ersten Ausführungsbeispiels der Einrichtung;
- Fig. 2: ein zweites Ausführungsbeispiel der Einrichtung bei einer waagrechten Getriebelage;
- Fig. 3: die Einrichtung von Fig. 2 bei einer senkrechten Getriebelage;
- Fig. 4: ein drittes Ausführungsbeispiel der Einrichtung bei einer waagrechten Getriebelage;
- Fig. 5: die Einrichtung von Fig. 4 bei einer senkrechten Getriebelage;
- Fig. 6 und 7: zwei unterschiedliche Ansichten einer an einem Getriebegehäuse angeordneten Einrichtung;
- Fig. 8: eine Anwendung der Entlüftungseinrichtung an einer Verseilanlage;
- Fig. 9: eine Rückschlagarmatur in einer Rohrleitung der Einrichtung;
- Fig. 10: eine alternative Ausführung einer Rückschlagarmatur gemäß Fig. 9; und
- Fig. 11: eine an einem Getriebe angeordnete Einrichtung mit einem Druckmessgerät.

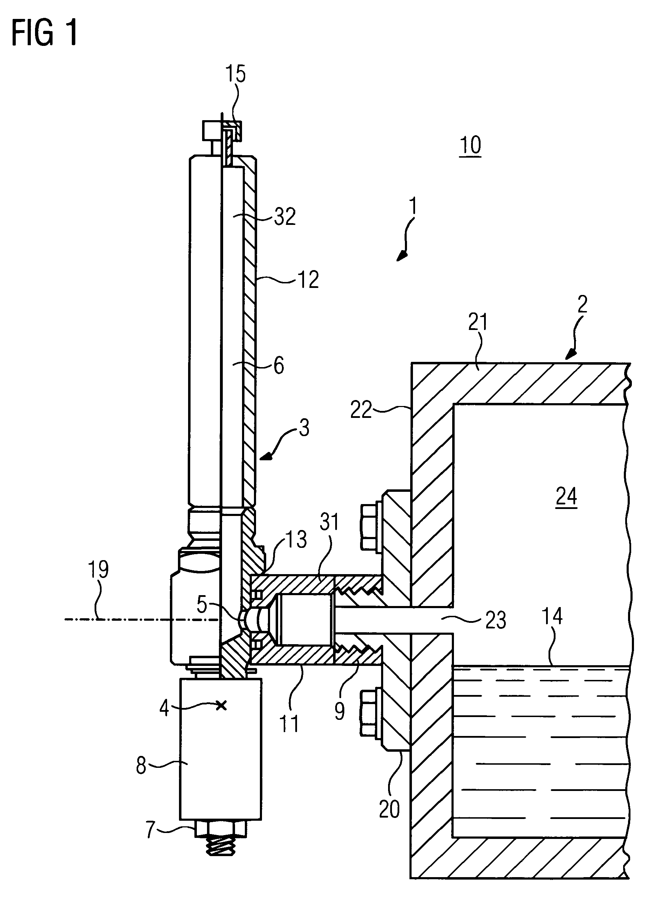

Fig. 1 zeigt eine Einrichtung 1 zur Entlüftung eines mit Tauchschmierung betriebenen Getriebes 2. Die Einrichtung 1 umfasst ein erstes, rohrförmiges Bauteil 11 und ein zweites, rohrförmiges Bauteil 12, welches wesentlich länger als das erste Bauteil 11 ist. Das zweite Bauteil 12 umfasst ein dünnwandiges Rohr mit einer schlanken Form, welches als Ausgleichsbehälter 6 dient. An einem Ende trägt das zweite Bauteil 12 eine dicke Stahlscheibe 8, welche mit einer Schraubvorrichtung 7 fest mit dem Ausgleichsbehälter 6 verbunden ist.

Das erste Bauteil 11 weist an seinem getriebeseitigen Ende ein Innengewinde 9 auf, das auf ein Außengewinde eines Schraubflansches 20, der an einer Außenseite 22 des Getriebes 2 angeordnet ist, fest aufgeschraubt ist. Beide Bauteile 11 und 12 sind mittels eines Gelenks 13 miteinander verbunden und zueinander beweglich. Das Gelenk 13 ist als eine Axial-Drehdurchführung, z.B. eine gerade kugelgelagerte Drehdurchführung, ausgebildet, d.h. das zweite Bauteil 12 ist um eine Drehachse 19, die mit einer Längsachse des ersten Bauteils zusammenfällt, gegenüber dem ersten Bauteil 11 und somit auch gegenüber dem Getriebe 2 an der Außenseite 22 des Getriebegehäuses 21 drehbar.

Die Einrichtung 1 umfasst eine sich entlang der beiden Bauteile 11, 12 erstreckende Rohrleitung 3 mit einem ersten Ende 31 und einem zweiten Ende 32. Die Rohrleitung 3 ist durch die Rohrinnenräume der beiden rohrförmigen Bauteile 11, 12 gebildet. Das erste Ende 31 befindet sich an einem getriebeseitigen Ende des ersten Bauteils 11. Das zweite Ende 32 befindet sich an einem vom Getriebe 2 abgewandten Ende des zweiten Bauteils 12, welches durch eine herkömmliche Entlüftungskappe 15 abgedeckt ist. Die Rohrleitung 3 durchläuft auch das Gelenk 13. Am Übergang vom ersten Bauteil 11 zum zweiten Bauteil 12, genauer: an der Verbindungsstelle 5 des Gelenks 13 und des zweiten Bauteils 12, weist die Rohrleitung eine Richtungsänderung um 90° auf. Durch die Rohrleitung 3 hindurch ist ein Luftaustausch zwischen dem ersten Ende 31 der Rohrleitung 3 und dem zweiten Ende 32 der Rohrleitung 3 möglich.

Durch eine Öffnung 23, welche im Getriebegehäuse 21 des Getriebes 2 oberhalb eines Schmierstoffpegels 14 ausgebildet ist, steht das zweite Ende 32 der Rohrleitung 3 mit dem Inneren 24 des Getriebes 2 in Verbindung. Auf diese Weise existiert eine durchgängige Möglichkeit eines Luftaustausches zwischen dem Inneren 24 des Getriebes 2 und der Umgebung 10 des Getriebes 2.

Aufgrund des Gewichtselements 8 liegt der Schwerpunkt 4 des zweiten Bauteils 12 bezüglich der Verbindungsstelle 5 des Gelenks 13 und des zweiten Bauteils 12 dem zweiten Rohrleitungsende 32 gegenüber. Im Falle einer Rotation des Getriebes 2 um die Drehachse 19 bewirkt die auf das Gewichtselement 8, welches an einem dem zweiten Rohrleitungsende 32 gegenüberliegenden Ende des zweiten Bauteil 12 angeordnet ist, wirkende Schwerkraft, dass das zweite Rohrleitungsende 32 vertikal oben bleibt. Das zweite Element 12 folgt aufgrund seiner Trägheit in einer Taumelbewegung zunächst der Bewegung des Getriebes 2. Die Lage des Schwerpunkts 4 und die genügend große Gewichtskraft des Gewichtselements 8 sorgen dann aber dafür, dass der Behälter 6 in jeder Position des Getriebes 2 in die vertikale Position gebracht wird.

Aufgrund der Länge des zweiten Bauteils 12 und der axial in dem zweiten Bauteil 12 verlaufenden Rohrleitung 3 kann somit kein Öl bis zu der Entlüftungsöffnung 15 gelangen, unabhängig von der momentanen Lage des Getriebes 2. Das selbständige Aufrichten des zweiten Bauteils 12 bewirkt, dass der Entlüfter 15 immer oberhalb des momentanen Ölstandes 14 positioniert ist, kein Öl austritt und sich im Inneren 24 des Getriebes 2 kein Überdruck aufbauen kann. Die Ausrichtung des zweiten Bauteil 12 in der Vertikalen bleibt unabhängig von der Lage des Getriebes 2 erhalten und stellt sicher, dass zwar kein Schmierstoff aus dem Getriebe 2 entweichen kann, aber ein zuverlässiger Luftaustausch zwischen dem Inneren 24 des Getriebes 2 und der Umgebung 10 des Getriebes 2 existiert.

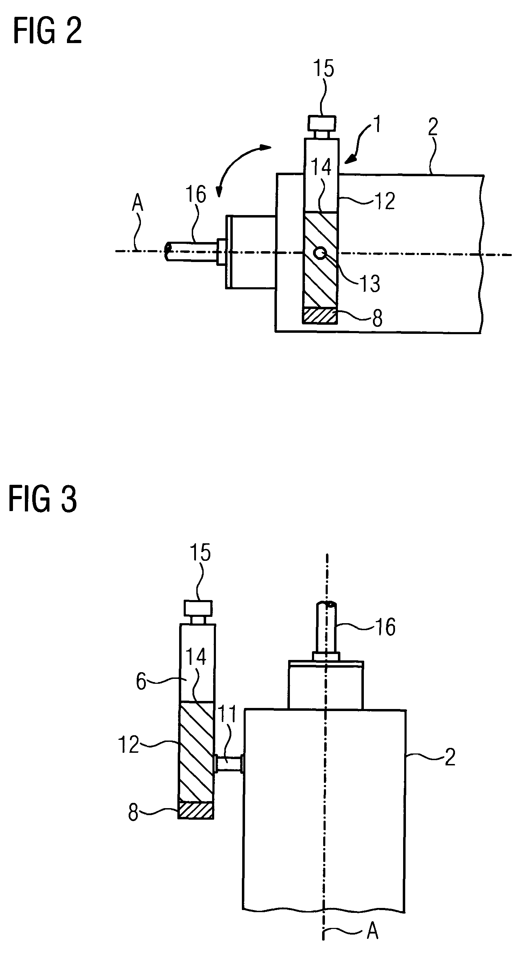

Fig. 2 zeigt die vertikale Lage eines zweiten Bauteils 12 einer Entlüftungseinrichtung 1 bei einer Ausrichtung der Achse A einer Ab- bzw. Antriebswelle 16 eines Getriebes 2 in der Waagrechten. Diese vertikale Ausrichtung des zweiten Bauteils 12 wird hervorgerufen durch seinen in der Vertikalen unterhalb eines Gelenks 13, um welches das zweite Bauteil drehbar gelagert ist, liegenden Schwerpunkt. Dieser relativ niedrig liegende Schwerpunkt wird durch ein Gewichtselement 8 an einem Ende des zweiten Bauteils 12 gebildet, das der an dem entgegen gesetzten Ende der zweiten Bauteils 12 angebrachten Entlüfteröffnung 15 gegenüber liegt. Das Innere des zweiten Bauteils 12 dient als ein mit dem Inneren des Getriebes 2 in Fluidaustausch stehender Ausgleichsbehälter, in dem das Getriebeöl denselben Pegel wie im Inneren des Getriebes 2 aufweist.

Fig. 3 zeigt ebenfalls die in Fig. 2 dargestellte Einrichtung 1, wobei im Unterschied zu Fig. 2 die Achse A der Ab- bzw. Antriebswelle 16 des Getriebes 2 vertikal ausgerichtet ist. Das relativ zu dem ersten Bauteil 11 und dem Getriebe 2 rotierbare zweite Bauteil 12 ist wiederum, wie auch in Fig. 2, vertikal ausgerichtet.

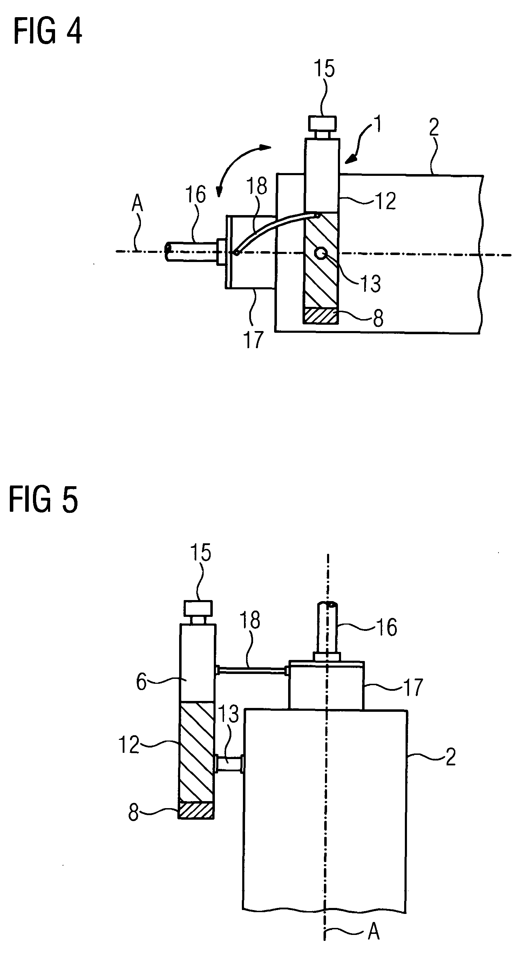

Das in Fig. 4 und 5 gezeigte Ausführungsbeispiel entspricht weitgehend dem in Fig. 2 und 3 gezeigten Ausführungsbeispiel, bis auf den Unterschied, dass zusätzlich zur Entlüftung der Flanschbuchse 17 ein Schlauch 18 mit axialem Rohrdrehgelenk montiert ist. Der Schlauch 18 ermöglicht einen Luft- und Fluidaustausch zwischen der Flanschbuchse 17 und dem zweiten Bauteil 12.

Zusätzlich können die Lager der Flanschbuchse 17 mit NILOS-Ringen versehen sein, um den Ölrücklauf in das Getriebe 2 zu erschweren. NILOS-Ringe, die z.B. aus verzinktem Stahl bestehen, können in fettgeschmierten Wälzlagern eingesetzt werden, um ein Entweichen von Schmiermittel und ein Einbdringen von Staub zu verhindern. NILOS-Ringe sind beispielsweise zu beziehen von der Ziller GmbH & Co. KG, 40721 Hilden, Deutschland. Die Lager der Zwischenwelle könnten noch zusätzlich gekapselt werden, damit immer genügend Restöl zur Verfügung steht. Da bei dieser Variante kein Überdruck aufgebaut wird, sind keine druckfesten Wellendichtringe notwendig.

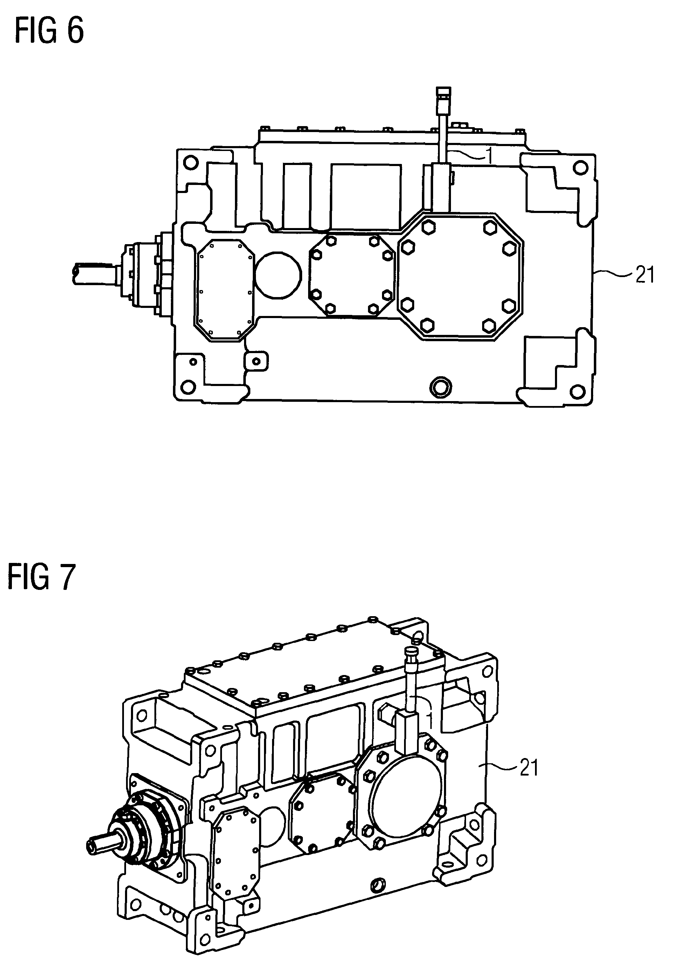

Fig. 6 und 7 zeigen eine Seitenansicht und eine isometrische Sicht einer Entlüftungseinrichtung 1 an einem Getriebegehäuse 21.

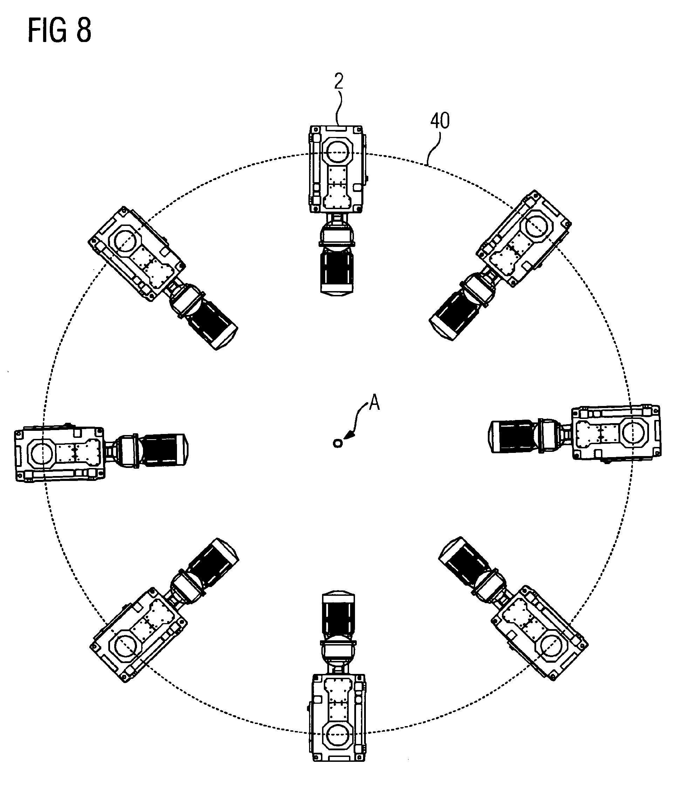

Fig. 8 illustriert eine mögliche Anwendung solcher Getriebe 2 auf einer Verseilanlage. Im Versatz von 90° sind vier Spulenträger auf einer Kreisbahn 40 mit einem Durchmesser von ca. 6 m um eine Zentralachse A angeordnet. Die Getriebe 2 werden auf je einem Spulenträger positioniert. Die Spulenträger rotieren mit einer Drehzahl von ca. 5,5 Umdrehungen pro Minute um die Zentralachse A. Bei diesem Vorgang drehen sich die Getriebe 2 jeweils um 360°.

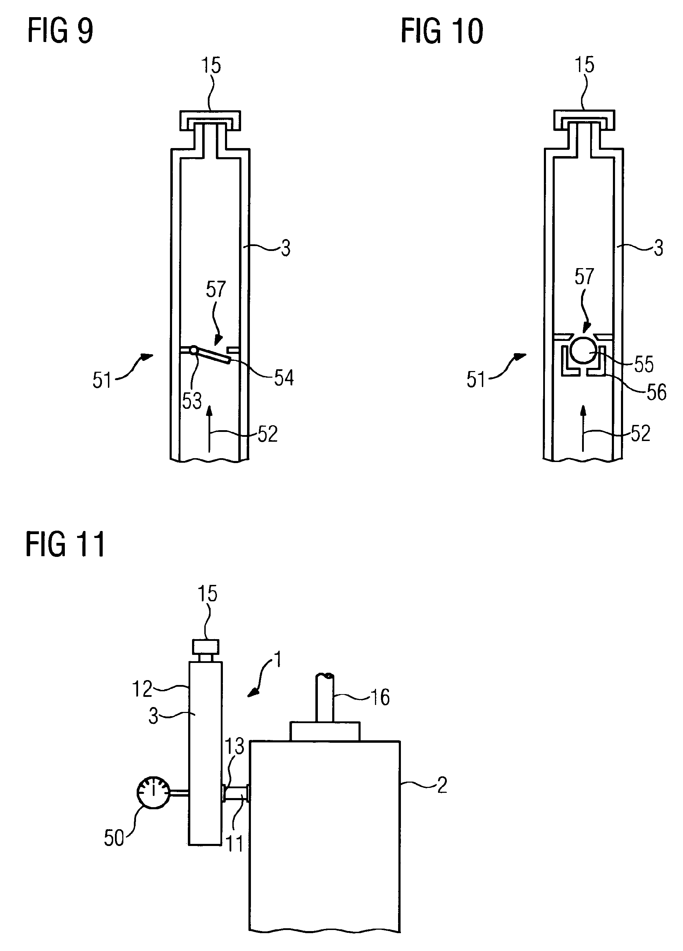

Fig. 9 und 10 zeigen jeweils einen Schnitt eines zweiten Endes einer Rohrleitung 3 mit einer Entlüftungsöffnung 15. Im Inneren der Rohrleitung 3 ist eine Rückschlagarmatur 51 eingesetzt, die geeignet ist, die Rohrleitung 3 gegen einen Durchtritt eines in Strömungsrichtung 52 zu der Entlüftungsöffnung 15 hin strömenden fluiden Schmiermittels, z.B. eines Getriebeöls, abzudichten. Bei dem in Fig. 9 dargestellten Ausführungsbeispiel ist die Rückschlagarmatur 51 als eine um ein Scharnier 53 drehbar gelagerte Klappe 54 ausgebildet, die bei Einwirken einer Strömung 52 eine Durchströmöffnung 57 verschließt. Bei dem in Fig. 10 dargestellten Ausführungsbeispiel ist die Rückschlagarmatur 51 als ein Käfig 56 mit einer darin geführten Kugel 55 ausgebildet, welche bei Einwirken einer Strömung 52 gegen eine Durchströmöffnung 57 gedrückt wird und diese somit verschließt.

Fig. 11 zeigt eine Seitenansicht einer Entlüftungseinrichtung 1, welche an einem Getriebe 2 montiert ist. Die Rohrleitung 3 führt durch ein fest an das Getriebe montiertes erstes Bauteil 11 und ein um ein Gelenk 13 drehbares zweites Bauteil 12. An einer Position des zweiten Bauteils 12, die an der Rohrleitung 3 gegenüber dem Gelenk 13 liegt, ist ein Druckmessgerät 50 angeordnet, welches zur Messung des Drucks im Inneren der Rohrleitung 3 dient. Das Druckmessgerät 50 dient als ein Druckwächter zur Überwachung der ordnungsgemäßen Funktion der Entlüftungseinrichtung 1. Auf diese Weise kann ein unzulässiger Überdruck im Inneren der Rohrleitung 3, z.B. bei einer Verstopfung der Entlüftungsöffnung 15, erkannt werden.

Obwohl die Erfindung im Detail durch die bevorzugten Ausführungsbeispiele näher illustriert und beschrieben wurde, so ist die Erfindung nicht durch die offenbarten Beispiele eingeschränkt.

## Patentansprüche

1. Getriebe (2) mit einer Einrichtung (1) zur Entlüftung von Getrieben (2),
- wobei die Einrichtung (1) ein erstes (11) und ein zweites (12) Bauteil, welche mittels eines Gelenks (13) miteinander verbunden und zueinander beweglich sind, und eine sich entlang der beiden Bauteile (11, 12) erstreckende Rohrleitung (3) umfasst, wobei ein Luftaustausch zwischen einem an dem ersten Bauteil (11) angeordneten ersten Ende (31) der Rohrleitung (3) und einem an dem zweiten Bauteil angeordneten zweiten Ende (32) der Rohrleitung (3) durch die Rohrleitung (3) hindurch möglich ist,
wobei der Schwerpunkt (4) des zweiten Bauteils (12) in Bezug auf eine Verbindungsstelle (5) des Gelenks (13) und des zweiten Bauteils (12) dem zweiten Ende (32) der Rohrleitung (3) gegenüber liegt,
wobei das erste Bauteil (11) fest mit dem Getriebe (2) verbunden und das zweite Bauteil (12) unter der Wirkung des Gelenks (13) relativ zu dem Getriebe (2) beweglich ist, und wobei das erste Ende (31) der Rohrleitung (3) durch eine Öffnung (23) in einem Gehäuse (21) des Getriebes (2) mit einem Innenraum (24) des Getriebes (2) und das zweite Ende (32) der Rohrleitung (3) mit der Umgebung (10) des Getriebes (2) in Verbindung steht, so dass ein Luftaustausch zwischen dem Getriebeinnenraum (24) und der Umgebung (10) möglich ist **dadurch gekennzeichnet,**
**dass** das zweite Bauteil (12) an einer Außenseite (22) eines Getriebegehäuses (21) des Getriebes (2) vorgesehen ist.

2. Getriebe (2) nach Anspruch 1, wobei sich die Rohrleitung (3) durch die beiden Bauteile (11, 12) und/oder das Gelenk (13) erstreckt.

3. Getriebe (2) nach Anspruch 1 oder 2, wobei die Einrichtung (1), insbesondere dessen zweites Bauteil (12), einen Ausgleichsbehälter (6) umfasst.

4. Getriebe (2) nach einem der vorhergehenden Ansprüche, wobei das zweite Bauteil (12) zur Festlegung des Schwerpunkts (4) eine Aufnahmevorrichtung (7) für ein Gewichtselement (8) aufweist.

5. Getriebe (2) nach einem der vorhergehenden Ansprüche, wobei die Einrichtung (1) eine Befestigungsvorrichtung (9) zur Montage des ersten Bauteils (11) an einer Außenseite (22) des Getriebegehäuses (21) umfasst.

6. Getriebe (2) nach einem der vorhergehenden Ansprüche, wobei das Gelenk (13) als ein Kugel- oder Drehgelenk, insbesondere als eine Axial-Drehdurchführung, ausgebildet ist.

7. Getriebe (2) nach einem der vorhergehenden Ansprüche, wobei am zweiten Ende (32) der Rohrleitung (3) eine Entlüfterkappe (15) angeordnet ist.

8. Getriebe (2) nach einem der vorhergehenden Ansprüche, wobei in die Rohrleitung (3) eine Rückschlagarmatur (51) eingesetzt ist, welche geeignet ist, die Rohrleitung (3) gegen einen Durchtritt eines Schmiermittels in Richtung von dem ersten (11) zu dem zweiten (12) Bauteil abzudichten.

9. Getriebe (2) nach einem der vorhergehenden Ansprüche, wobei das zweite Ende (32) der Rohrleitung (3) unabhängig von der Lage des Getriebes (2) vertikal über einem Schmierstoffpegel (14) im Innenraum (24) des Getriebes (2) liegt.

## Claims

1. Transmission (2) with a facility (1) for ventilating transmissions (2),
- wherein the facility (1) comprises a first (11) and a second (12) component, which are connected to one another and can be moved relative to one another by means of a joint (13), and a pipeline (3) extending along the two components (11, 12), wherein air can be exchanged between a first end (31) of the pipeline (3) arranged on the first component (11) and a second end (32) of the pipeline (3) arranged on the second component through the pipeline (3), wherein the
center of gravity (4) of the second component (12) is opposite the second end (32) of the pipeline (3) in respect of a connecting point (5) between the joint (13) and the second component (12),
wherein the first component (11) has a fixed connection to the transmission (2) and the second component (12) is moveable relative to the transmission (2) under the effect of the joint (13) and wherein the first end (31) of the pipeline (3) is connected to an interior (24) of the transmission (2) through an opening (23) in a housing (21) of the transmission (2) and the second end (32) of the pipeline (3) is connected to the environment (10) of the transmission (2) so that air can be exchanged between the transmission interior (24) and the environment (10),
**characterised in that**
the second component (12) is provided on an outer side (22) of a transmission housing (21) of the transmission (2).

2. Transmission (2) according to claim 1, with the pipeline (3) extending through the two components (11, 12) and/or the joint (13).

3. Transmission (2) according to claim 1 or 2, with the facility (1), in particular its second component (12), including an expansion tank (6).

4. Transmission (2) according to one of the preceding claims, wherein the second component (12) for defining the center of gravity (4) has a receiving apparatus (7) for a weight element (8).

5. Transmission (2) according to one of the preceding claims, wherein the facility (1) includes a fastening apparatus (9) for installing the first component (11) on an outer side (22) of the transmission housing (21).

6. Transmission (2) according to one of the preceding claims, wherein the joint (13) is embodied as a ball or rotary joint, in particular as an axial rotary feedthrough.

7. Transmission (2) according to one of the preceding claims, wherein a ventilator cap (15) is arranged on the second end (32) of the pipeline (3).

8. Transmission (2) according to one of the preceding claims, wherein a non-return valve (51) is inserted into the pipeline (3), which is suited to sealing the pipeline (3) against a passage of lubricant in the direction from the first (11) to the second (12) component.

9. Transmission (2) according to one of the preceding claims, wherein the second end (32) of the pipeline (3) lies vertically above a lubricant level (14) inside (24) the transmission (2) irrespective of the position of the transmission (2).

## Revendications

1. Engrenage ( 2 ) ayant un dispositif ( 1 ) de purge d'engrenages ( 2 ),
- dans lequel le dispositif ( 1 ) comprend un premier ( 11 ) et un deuxième éléments ( 12 ), qui sont reliés entre eux et mobiles l'un par rapport à l'autre au moyen d'une articulation ( 13 ), et une canalisation ( 3 ) s'étendant le long des deux éléments ( 11, 12 ), un échange d'air entre un premier bout ( 31 ), disposé sur le premier élément ( 11 ), de la canalisation ( 3 ) et un deuxième bout ( 32 ), disposé sur le deuxième élément, de la canalisation ( 3 ) étant rendu possible par la canalisation ( 3 ),
dans lequel le centre ( 4 ) de gravité du deuxième élément ( 12 ) est, par rapport à un point ( 5 ) de liaison de l'articulation ( 13 ) et du deuxième élément ( 12 ), opposé au deuxième bout ( 32 ) de la canalisation ( 3 ),
dans lequel le premier élément ( 11 ) est relié fixement à l'engrenage ( 2 ) et le deuxième élément ( 12 ) est, sous l'effet de l'articulation ( 13 ), mobile par rapport à l'engrenage ( 2 ) et
dans lequel le premier bout ( 31 ) de la canalisation ( 3 ) est en communication, par une ouverture ( 23 ) dans un carter ( 21 ) de l'engrenage ( 2 ), avec un espace ( 24 ) intérieur de l'engrenage ( 2 ) et le deuxième bout ( 32 ) de la canalisation ( 3 ) avec l'environnement ( 10 ) de l'engrenage ( 2 ), de manière à rendre possible un échange d'air entre l'espace ( 24 ) intérieur de l'engrenage et l'environnement ( 10 ),
**caractérisé**
**en ce que** le deuxième élément ( 12 ) est prévu sur un côté ( 22 ) extérieur d'un carter ( 21 ) de l'engrenage ( 2 ).

2. Engrenage ( 2 ) suivant la revendication 1, dans lequel la canalisation ( 3 ) traverse les deux éléments ( 11, 12 ) et/ou l'articulation ( 13 ).

3. Engrenage ( 2 ) suivant la revendication 1 ou 2, dans lequel le dispositif ( 1 ), notamment son deuxième élément ( 12 ), comprend un récipient ( 6 ) de compensation.

4. Engrenage ( 2 ) suivant l'une des revendications précédentes, dans lequel le deuxième élément ( 12 ) a, pour la fixation du centre ( 4 ) de gravité, un dispositif ( 7 ) de logement d'une masselotte ( 8 ).

5. Engrenage ( 2 ) suivant l'une des revendications précédentes, dans lequel le dispositif ( 1 ) comprend un système ( 9 ) de fixation pour monter le premier élément ( 11 ) sur un côté ( 22 ) extérieur du carter ( 21 ) de l'engrenage.

6. Engrenage ( 2 ) suivant l'une des revendications précédentes, dans lequel l'articulation ( 13 ) est constituée sous la forme d'une rotule ou d'une articulation pivotante, notamment sous la forme d'une traversée à rotation axiale.

7. Engrenage ( 2 ) suivant l'une des revendications précédentes, dans lequel une coiffe ( 15 ) de purge d'air est montée au deuxième bout ( 32 ) de la canalisation ( 3 ).

8. Engrenage ( 2 ) suivant l'une des revendications précédentes, dans lequel, dans la canalisation ( 3 ), est inséré un clapet ( 51 ) de retenue, propre à rendre étanche la canalisation ( 3 ) à l'encontre d'un passage d'un lubrifiant dans le sens du premier élément ( 11 ) au deuxième élément ( 12 ).

9. Engrenage ( 2 ) suivant l'une des revendications précédentes, dans lequel le deuxième bout ( 32 ) de la canalisation ( 3 ) est, indépendamment de la position de l'engrenage ( 2 ), disposé verticalement au-dessus d'un niveau ( 14 ) du lubrifiant dans l'espace ( 24 ) intérieur de l' engrenage ( 2 ).
